Europäisches Patentamt

European Patent Office

Office européen des brevets

(19)

(11) Publication number: **0 300 655 B1**

## EUROPEAN PATENT SPECIFICATION

(12)

(45) Date of publication of patent specification: **23.09.92**

(51) Int. Cl.⁵: **F16K 43/00**

(21) Application number: **88306280.4**

(22) Date of filing: **08.07.88**

(54) **Device and method for making a third flow connection to a stop valve.**

(30) Priority: **22.07.87 GB 8717325**

(43) Date of publication of application:
**25.01.89 Bulletin 89/04**

(45) Publication of the grant of the patent:
**23.09.92 Bulletin 92/39**

(84) Designated Contracting States:
**AT BE CH DE FR GB IT LI LU NL SE**

(56) References cited:
**AT-B- 295 089
DD-A- 263 811
DE-A- 2 547 582
US-A- 4 265 269**

(73) Proprietor: **South Staffordshire Water PLC
Green Lane
Walsall WS2 7PD(GB)**

(72) Inventor: **Jones, Barry Oliver
375 Cannock Road
High Town Hednesford WS11 2TD(GB)**

(74) Representative: **Cuddon, George Desmond et al
MARKS & CLERK Alpha Tower Suffolk Street
Oueensway
Birmingham B1 1TT(GB)**

EP 0 300 655 B1

Rank Xerox (UK) Business Services

# Description

This invention relates to a method of making a third flow connection to a stop valve.

The invention also relates to a method of clearing contaminants, debris or corrosion products, from a section of a fluid supply passage which has stop valves spaced along it.

Solid contaminating material accumulating in a water main, for example as a result of repair or maintenance of that main, can flow to, and accumulate in, consumer's stop valves and outlet valves. The present invention provides apparatus and methods whereby such contaminants can be flushed from a supply main or from a consumer's branch line, as necessary.

According to one aspect of the invention there is provided a method of making a third flow connection to a fluid control valve which includes a valve body having an inlet, an outlet and a valve seat between said inlet and said outlet, said valve seat being engageable by a closure device, said method being characterised by removal of said closure device and sealingly inserting into the valve body a pipe which sealingly engages said valve seat, such that there is no fluid communication between said inlet and said outlet of said valve, and which includes an opening through which the bore of said pipe can communicate with one side of said valve seat.

The invention also resides in a device for making a third flow connection to a fluid control valve which includes a valve body having an inlet, an outlet, a valve seat between said inlet and said outlet and a threaded portion for receiving a closure device which is engageable with the valve seat, characterised in that said device comprises a pipe which is threadedly and sealingly engageable with said threaded portion of said valve body, and means on said pipe for sealing engagement with said valve seat, such that there is no fluid communication between said inlet and said outlet of said valve, said pipe having an opening through which the bore of said pipe can communicate with one side of said valve seat.

Embodiments of the invention will now be described by way of example only and with reference to the accompanying drawings in which:-

Figure 1 shows, diagrammatically, an apparatus for removing contaminants from a fluid supply passage,

Figure 2 shows a third connection to one stop valve in Figure 1, and

Figure 3 shows a third connection to another of the stop valves in Figure 1.

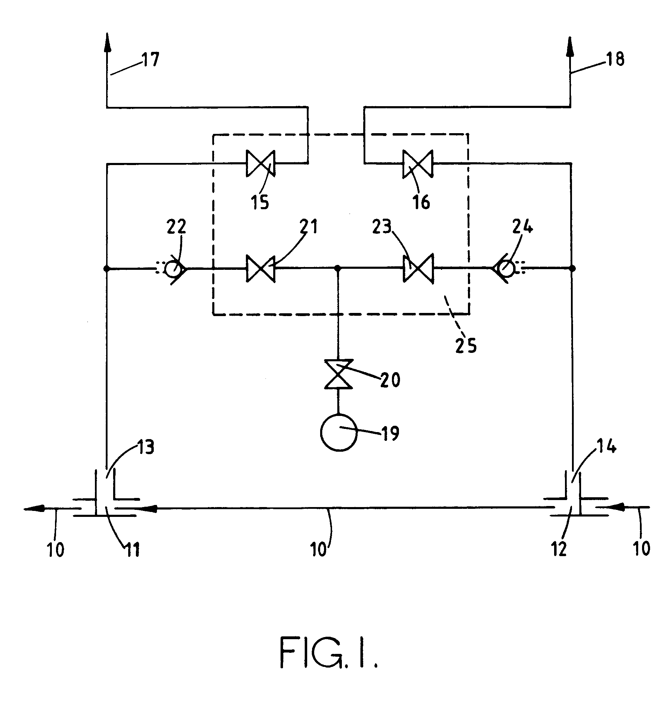

As shown in Figure 1 a fluid supply passage 10 has stop valves 11, 12 each of which is modified in a manner to be described to provide respective connections 13, 14. Connections 13, 14 communicate through respective valves 15, 16 to respective vent pipes 17, 18. A source 19 of pressurized fluid has a shut-off valve 20 through which the pressurized fluid can pass through a stop valve 21 and a non-return valve 22 to the connection 13, or through a stop valve 23 and a non-return valve 24 to the connection 14.

It will be understood that though the valves 15, 16, 21, 23 are shown in the diagram as located adjacent one another, they may be spaced to the same extent as the valves 11, 12, or have alternative locations. In either case the valves 15, 16, 21, 23 may form part of a control device, indicated at 25, by means of which these valves may be operated in unison as described hereafter.

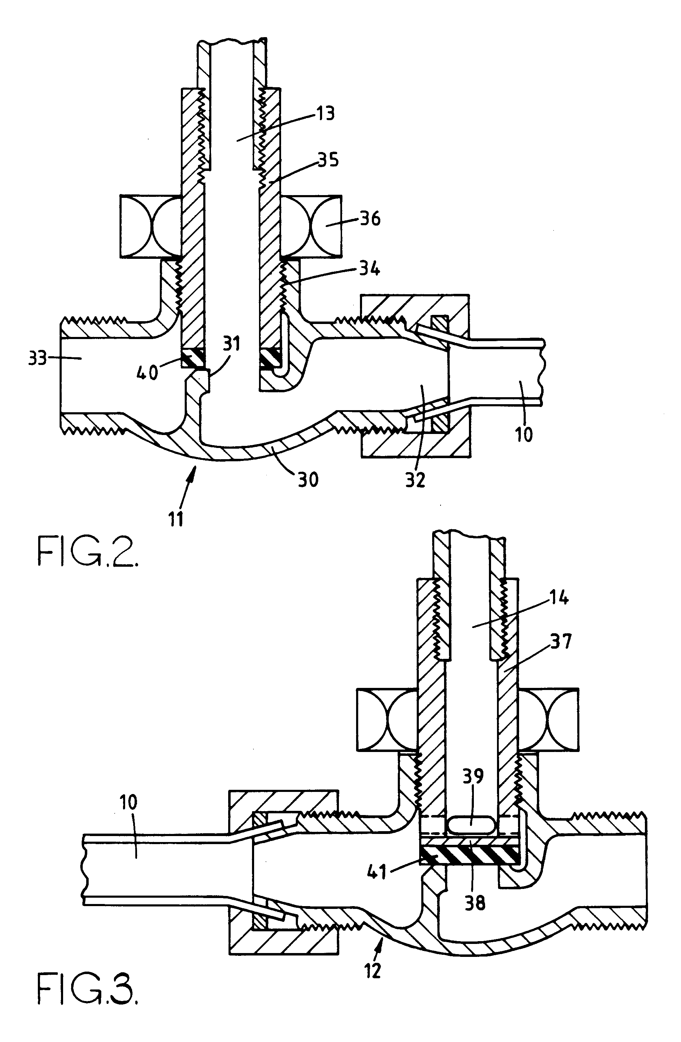

The stop valve 11 shown in Figure 2 has a conventional valve body 30 which includes a valve seat 31 between an inlet 32 and an outlet 33. In its unmodified form the valve 11 would include a flow control assembly engaging a threaded portion 34 in the body 30 and having a closure device engageable with the seat 31. As shown in Figure 2 the flow control assembly with its closure device is removed and a pipe 35 is screwed into the body 30 so as sealingly to engage the seat 31 and thereby to provide the third flow connection 13 which communicates only with the inlet 32. A gland nut 36 maintains a sealing connection between the pipe 35 and body 30. The pipe 35 may incorporate an annular sealing element 40 for engaging the seat 31.

The stop valve 12 is generally similar to the valve 11 but its third flow connection 14 is provided by a pipe 37 having an end wall 38 which sealingly engages the valve seat. The pipe 37 has a port 39 which communicates only with the valve outlet. The third flow connections 13, 14 are thus connected only, as can be seen in Figure 1, with the section of the passage 10 between valves 11, 12. A sealing element 41 for engagement with the valve seat may be in the form of a disc and be secured to the wall 38.

In normal use fluid flows through the passage from right to left, as indicated in Figure 1. In order to remove contaminants from the passage 10 between the valves 11, 12 and also from those valves, the valves 11, 12 are modified as shown in Figures 2 and 3. The valves 15, 23 are shut and the valves 20, 21 and 16 are opened. Pressurized fluid flows from the source 19 through the valves 20, 21, 22 to the vent pipe 18, against the normal direction of flow in the passage 10. Since contaminants will generally accumulate in the direction of fluid flow these contaminants will be substantially entirely dislodged and ejected through the vent pipe 18. In order to effect more thorough cleaning the valves 21, 16 may subsequently be shut and the valves 23, 15 opened so that flow of the pressurized fluid is reversed. The control device 25 may incorporate means for automatically operating the valves 15, 16, 21, 23 to effect a series of flow reversals.

It will be apparent that the third flow connections shown in Figures 2 and 3 may alternatively be used for sampling the pressure or quality or fluid which flows, in normal use, in the passage 10. Either of these connections may also be used for introducing a cleaning material, or a disinfectant such as chlorine, into the passage 10.

## Claims

1. A method of making a third flow connection (13, 14) to a fluid control valve (11 or 12) which includes a valve body (30) having an inlet (32), an outlet (33) and a valve seat (31) between said inlet (32) and said outlet (33), said valve seat (31) being engageable by a closure device, said method being characterised by removal of said closure device and sealingly inserting into the valve body (30) a pipe (35 or 37) which sealingly engages said valve seat (31), such that there is no fluid communication between said inlet (32) and said outlet (33) of said valve (30), and which includes an opening through which the bore of said pipe (35 or 37) can communicate with one side of said valve seat (31).

2. A method as claimed in Claim 1, characterised in that third flow connections (13, 14) are made to respective ones of two of said fluid control valves (11, 12) which are connected through a section of a supply passage (10), such that fluid can flow through said section of the supply passage (10) between said third connections (13, 14) but not between said third connections (13, 14) and other sections of said supply passage (10), and a pressurised fluid is applied to one of said third connections (13 or 14) and vented from the other of said third connections (13 or 14).

3. A method as claimed in Claim 2, characterised in that said pressurised fluid is sequentially applied to alternate ones (13 or 14) of said third connections and simultaneously vented from alternate others (13 or 14) of said third connections.

4. A device for making a third flow connection (13, 14) to a fluid control valve (11 or 12) which includes a valve body (30) having an inlet (32), an outlet (33), a valve seat (31) between said inlet (32) and said outlet (33) and a threaded portion (34) for receiving a closure device which is engageable with the valve seat (31), characterised in that said device comprises a pipe (35 or 37) which is threadedly and sealingly engageable with said threaded portion (34) of said valve body (30), and means (40 or 41) on said pipe for sealing engagement with said valve seat (31), such that there is no fluid communication between said inlet (32) and said outlet (33) of said valve (30), said pipe (35 or 37) having an opening through which the bore of said pipe (35 or 37) can communicate with one side of said valve seat (31).

5. A method of clearing contaminating material from a section of a fluid supply passage (10) which has stop valves (11, 12) spaced along it, characterised in that said method comprises making to those two of said valves which are located at the ends of said section of said fluid supply passage which has to be cleaned, third flow connections (13, 14) as claimed in Claim 1, such that fluid can flow only through said section of said fluid supply passage (10) and not elsewhere in said fluid supply passage (10), introducing a pressurised fluid into one of said third flow connections (13, 14) and venting said pressurised fluid from the other of said third flow connections (13, 14).

6. A method as claimed in Claim 5, characterised in that said pressurised fluid is caused to flow through said passage (10) counter to the normal direction of fluid flow therethrough.

7. A method as claimed in Claim 6, characterised in that said pressurised fluid is sequentially applied to alternate ones (13 or 14) of said third connections and simultaneously vented from alternate others (13 or 14) of said third connections.

## Patentansprüche

1. Verfahren zur Herstellung einer dritten Durchflußverbindung (13, 14) mit einem Fluidsteuerventil (11 oder 12), das einen Ventilkörper (30) mit einem Einlaß (32), einem Auslaß (33) und einem Ventilsitz (31) zwischen dem Einlaß (32) und dem Auslaß (33) aufweist, wobei an dem Ventilsitz (31) eine Schließeinrichtung in Anlage bringbar ist, gekennzeichnet durch Entfernen der Schließeinrichtung und abdichtendes Einführen eines Rohrs (35 oder 37) in den Ventilkörper (30), das an dem Ventilsitz (31) abdichtend anliegt, so daß zwischen dem Einlaß (32) und dem Auslaß (33) des Ventils (30) keine Fluidverbindung besteht, und das Rohr eine Öffnung aufweist, durch die die Bohrung des Rohrs (35 oder 37) mit einer Seite des Ventilsitzes (31) kommunizieren kann.

2. Verfahren nach Anspruch 1, dadurch gekennzeichnet, daß dritte Durchflußverbindungen (13, 14) mit jeweils einem von zwei der Fluidsteuerventile (11, 12), die durch einen Abschnitt einer Förderleitung (10) verbunden sind, hergestellt werden, so daß Fluid durch den genannten Abschnitt der Förderleitung (10) zwischen den dritten Verbindungen (13, 14), aber nicht zwischen den dritten Verbindungen (13, 14) und weiteren Abschnitten der Förderleitung (10) strömen kann, und daß ein Druckfluid auf eine der dritten Verbindungen (13 oder 14) aufgebracht und aus der anderen der dritten Verbindungen (13 oder 14) abgelassen wird.

3. Verfahren nach Anspruch 2, dadurch gekennzeichnet, daß das Druckfluid sequentiell auf alternierende (13 oder 14) der dritten Verbindungen aufgebracht und gleichzeitig aus alternierenden weiteren (13 oder 14) der dritten Verbindungen abgelassen wird.

4. Vorrichtung zum Herstellen einer dritten Durchflußverbindung (13, 14) mit einem Fluidsteuerventil (11 oder 12), das einen Ventilkörper (30) mit einem Einlaß (32), einem Auslaß (33), einem Ventilsitz (31) zwischen dem Einlaß (32) und dem Auslaß (33) und einem Gewindeteil (34) aufweist, um eine Schließeinrichtung, die mit dem Ventilsitz (31) in Anlage bringbar ist, aufzunehmen, dadurch gekennzeichnet, daß die Vorrichtung aufweist: ein Rohr (35 oder 37), das mit dem Gewindeteil (34) des Ventilkörpers (30) in Schraub- und Dichtverbindung bringbar ist, und eine Einrichtung (40 oder 41) an dem Rohr zur abdichtenden Anlage an dem Ventilsitz (31), so daß zwischen dem Einlaß (32) und dem Auslaß (33) des Ventils (30) keine Fluidverbindung besteht, wobei das Rohr (35 oder 37) eine Öffnung aufweist, durch die die Bohrung des Rohrs (35 oder 37) mit einer Seite des Ventilsitzes (31) kommunizieren kann.

5. Verfahren zum Beseitigen von Verschmutzungsstoffen aus einem Abschnitt einer Fluidförderleitung (10), in der mit Abstand Absperrventile (11, 12) angeordnet sind, dadurch gekennzeichnet, daß das Verfahren umfaßt: Herstellen von dritten Durchflußverbindungen (13, 14) nach Anspruch 1 mit den beiden der genannten Ventile, die an den Enden des zu reinigenden Abschnitts der Fluidförderleitung liegen, so daß Fluid nur durch diesen Abschnitt der Fluidförderleitung (10) und nicht anderswo in der Fluidförderleitung (10) strömen kann, Einleiten eines Druckfluids in eine der dritten Durchflußverbindungen (13, 14) und Ablassen des Druckfluids aus der anderen der dritten Durchflußverbindungen (13, 14).

6. Verfahren nach Anspruch 5, dadurch gekennzeichnet, daß das Druckfluid zum Strömen durch die Leitung (10) entgegen der Normalrichtung des Fluidstroms durch diese veranlaßt wird.

7. Verfahren nach Anspruch 6, dadurch gekennzeichnet, daß das Druckfluid sequentiell auf alternierende (13 oder 14) der dritten Verbindungen aufgebracht und gleichzeitig aus alternierenden weiteren (13 oder 14) der dritten Verbindungen abgelassen wird.

**Revendications**

1. Un procédé pour établir une troisième connexion d'écoulement (13, 14) avec une vanne de régulation du fluide (11 ou 12), comprenant un corps de vanne (30) comportant une entrée (32), une sortie (33) et un siège de vanne (31) entre ladite entrée (32) et ladite sortie (33), ledit siège de la vanne (31) pouvant être connecté à un dispositif de fermeture, ledit procédé étant caractérisé par l'enlèvement du dit dispositif de fermeture et par l'insertion étanche dans le corps de la vanne (30) d'un tuyau (35 ou 37), s'engageant de façon étanche dans ledit siège de la vanne (31), de sorte qu'il n'y a pas de communication de fluide entre ladite entrée (32) et ladite sortie (33) de ladite vanne (30), et comprenant une ouverture à travers laquelle l'alésage du dit tuyau (35 ou 37) peut communiquer avec un côté du dit siège de la vanne (31).

2. Un procédé selon la revendication 1, caractérisé en ce que des troisièmes connexions d'écoulement (13, 14) sont établies avec les connexions respectives de deux des dites vannes de régulation de fluide (11, 12), connectées par l'intermédiaire d'une section d'un passage d'admission (10), de sorte que le fluide peut traverser ladite section du passage d'admission (10) entre lesdites troisièmes connexions (13, 14) mais non pas entre lesdites troisièmes connexions (13, 14) et d'autres sections du dit passage d'admission (10) et en ce qu'un fluide sous pression est alimenté par l'intermédiaire de l'une des dites troisièmes connexions (13 ou 14) et déchargé par l'intermédiaire de l'autre des dites troisièmes connexions (13 ou 14).

3. Un procédé selon la revendication 2, caractérisé en ce que ledit fluide sous pression est alimenté séquentiellement et alternativement par l'intermédiaire de l'une (13 ou 14) des dites troisièmes connexions et déchargé simultanément et alternativement par l'intermédiaire de l'autre (13 ou 14) des dites troisièmes connexions.

4. Un appareil pour établir une troisième connexion d'écoulement (13, 14) avec une vanne de régulation du fluide (11 ou 12), comprenant un corps de vanne (30) comportant une entrée (32), une sortie (33), un siège de vanne (31) entre ladite entrée (32) et ladite sortie (33) ainsi qu'une partie filetée (34) pour recevoir un dispositif de fermeture pouvant être connecté au siège de la vanne (31), caractérisé en ce que ledit appareil comprend un tuyau (35 ou 37), pouvant s'engager par filetage et de façon étanche dans ladite partie filetée (34) du dit corps de la vanne (30) ainsi qu'un moyen (40 ou 41) sur ledit tuyau pour un engagement étanche sur ledit siège de la vanne (31), de sorte qu'il n'y a pas de communication de fluide entre ladite entrée (32) et ladite sortie (33) de ladite vanne (30), ledit tuyau (35 ou 37) comportant une ouverture à travers laquelle l'alésage du dit tuyau (35 ou 37) peut communiquer avec un côté du dit siège de la vanne (31).

5. Un procédé permettant d'éliminer les substances polluantes d'une section d'un passage d'admission de fluide (10) comportant des vannes d'arrêt (11, 12) espacées sur sa longueur, caractérisé en ce que ledit procédé comprend l'établissement sur deux des dites vannes situées aux extrémités de ladite section du dit passage d'admission de fluide devant être nettoyé, de troisièmes connexions d'écoulement (13, 14) comme revendiqué dans la revendication 1, de sorte que le fluide ne peut traverser que ladite section du dit passage d'admission de fluide (10) et non pas d'autres sections du dit passage d'admission de fluide (10), en ce qu'un fluide sous pression est alimenté par l'intermédiaire de l'une des dites troisièmes connexions d'écoulement (13, 14) et en ce que ledit fluide sous pression est déchargé par l'intermédiaire de l'autre des dites troisièmes connexions d'écoulement (13, 14).

6. Un procédé selon la revendication 5, caractérisé en ce que ledit fluide sous pression est entraîné à traverser ledit passage (10) dans un sens contraire à la direction normale de l'écoulement de fluide.

7. Un procédé selon la revendication 6, caractérisé en ce que ledit fluide sous pression est séquentiellement et alternativement alimenté par l'intermédiaire de l'une (13 ou 14) des dites troisièmes connexions d'écoulement et en ce qu'il est simultanément et alternativement déchargé par l'intermédiaire de l'autre (13 ou 14) des dites troisièmes connexions d'écoulement.

FIG. I.

FIG.2.

FIG.3.